(19) **Europäisches Patentamt / European Patent Office / Office européen des brevets**

(11) **EP 4 351 945 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **22734612.9**

(22) Anmeldetag: **22.06.2022**

(51) Internationale Patentklassifikation (IPC):
**B60W 30/14** (2006.01)    **B60W 30/18** (2012.01)

(52) Gemeinsame Patentklassifikation (CPC):
**B60W 30/146; B60W 30/18145;** B60W 2050/0026;
B60W 2552/20; B60W 2552/30; B60W 2556/40;
B60W 2720/10; B60W 2720/103

(86) Internationale Anmeldenummer:
**PCT/EP2022/067043**

(87) Internationale Veröffentlichungsnummer:
**WO 2023/006306 (02.02.2023 Gazette 2023/05)**

(54) **VERFAHREN ZUR BEGRENZUNG EINER FAHRGESCHWINDIGKEIT EINES FAHRZEUGS BEIM DURCHFAHREN EINER KURVE**

METHOD FOR LIMITING A TRAVELLING SPEED OF A VEHICLE WHEN DRIVING AROUND A BEND

PROCÉDÉ DE LIMITATION DE LA VITESSE D'UN VÉHICULE LORS DU PASSAGE D'UN VIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2021 DE 102021003873**

(43) Veröffentlichungstag der Anmeldung:
**17.04.2024 Patentblatt 2024/16**

(73) Patentinhaber: **Mercedes-Benz Group AG**
**70372 Stuttgart (DE)**

(72) Erfinder:
- **BOTT, Thiemo**
  **71101 Schönaich (DE)**
- **GÖRKE, Daniel**
  **70771 Leinfelden-Echterdingen (DE)**
- **KNÖDLER, Philipp**
  **71069 Sindelfingen (DE)**
- **RAAB, Wolfgang**
  **70839 Gerlingen (DE)**
- **SCHLUTTER, Matthias**
  **71093 Weil im Schönbuch (DE)**
- **STREITER, Stephanie**
  **71032 Böblingen (DE)**
- **SYLLA, Annette**
  **71120 Grafenau (DE)**
- **VOIGTLÄNDER, Ruben**
  **70567 Stuttgart (DE)**

(74) Vertreter: **Novagraaf Group**
**Chemin de l'Echo 3**
**1213 Onex / Geneva (CH)**

(56) Entgegenhaltungen:
WO-A1-2015/178839    DE-A1- 102009 000 397
US-A1- 2005 240 334

**Beschreibung**

Die Erfindung betrifft ein Verfahren zur Begrenzung einer Fahrgeschwindigkeit eines Fahrzeugs beim Durchfahren einer Kurve gemäß dem Oberbegriff des Anspruchs 1.

Bei der Bestimmung optimaler Positionen empfohlener Durchfahrts-Geschwindigkeiten von Kurven gibt es in der Literatur viele Ansätze, die jedoch die Realität wenig bis mangelhaft abbilden. Häufig wird ein komplexer Kurven-Verlauf mit nur einem einzigen Geschwindigkeits-Limit bedacht. In der Folge wird das automatisierte und prädiktive Fahrgeschwindigkeits-Regelsystem die Geschwindigkeit beim Durchfahren von Kurven häufig zum falschen Zeitpunkt (oder an der falschen Position) einregeln.

DE 10 2006 006 365 A1 beschreibt eine Vorrichtung und ein Verfahren zur Längsbewegungssteuerung eines Fahrzeugs, bei dem Umfelddaten und/oder Streckendaten erfasst werden und einer positionsabhängigen Beeinflussung des Fahrzeugs auf einer Route zugrunde gelegt werden. Dabei werden vorausschauend ein Krümmungsverlauf der Route und ein hiervon abhängiger Höchstgeschwindigkeitsverlauf bestimmt, der Höchstgeschwindigkeitsverlauf zur Anpassung an physikalische Belastungsgrenzen des Fahrzeugs korrigiert und basierend auf dem korrigierten Höchstgeschwindigkeitsverlauf eine Geschwindigkeitsbegrenzung durchgeführt.

DE 10 2009 023 489 A1 beschreibt ein Verfahren sowie eine Vorrichtung zur Geschwindigkeitsregelung eines Fahrzeugs. Dabei wird anhand von digitalen Kartendaten ein vom voraus liegenden Streckenabschnitt abhängiger Höchstgeschwindigkeitsverlauf ermittelt wird. Weiterhin wird eine Begrenzung der Geschwindigkeit des Fahrzeugs abhängig vom ermittelten Höchstgeschwindigkeitsverlauf derart vorgenommen, dass eine vorgegebene Grenzgeschwindigkeit nicht unterschritten wird, selbst wenn diese größer als eine Geschwindigkeit des Höchstgeschwindigkeitsverlaufs ist.

US2005/0240334 A1 und DE102009000397 A1 begrenzen die Geschwindigkeit basierend auf der Kurvenkrümmung.

Der Erfindung liegt die Aufgabe zu Grunde, ein verbessertes Verfahren zur Begrenzung einer Fahrgeschwindigkeit eines Fahrzeugs beim Durchfahren einer Kurve anzugeben.

Die Aufgabe wird erfindungsgemäß gelöst durch ein Verfahren zur Begrenzung einer Fahrgeschwindigkeit eines Fahrzeugs beim Durchfahren einer Kurve gemäß Anspruch 1. Vorteilhafte Ausgestaltungen der Erfindung sind Gegenstand der Unteransprüche.

Bei einem erfindungsgemäßen Verfahren zur Begrenzung einer Fahrgeschwindigkeit eines Fahrzeugs beim Durchfahren einer Kurve wird, insbesondere mittels einer digitalen Karte und/oder anhand von Daten einer Sensorik zur Umfelderfassung, ein Verlauf einer Krümmung eines dem Fahrzeug vorausliegenden Streckenabschnitts ermittelt, wobei abhängig vom Verlauf der Krümmung und von physikalischen Belastungsgrenzen des Fahrzeugs ein Verlauf einer zulässigen Kurvengeschwindigkeit ermittelt und das Fahrzeug so gesteuert wird, dass die ermittelten zulässigen Kurvengeschwindigkeiten beim Durchfahren der Kurve nicht überschritten werden. Erfindungsgemäß wird durch Auswertung des Verlaufs der Krümmung ein Streckenabschnitt, auf dem die Krümmung größer als ein vorgegebener Krümmungsgrenzwert ist, als Kurvenabschnitt identifiziert, wobei auf dem identifizierten Kurvenabschnitt lokale Krümmungsmaxima identifiziert werden, und wobei bei Identifikation von mehreren lokalen Krümmungsmaxima auf dem Kurvenabschnitt für jedes lokale Krümmungsmaximum eine zulässige Kurvengeschwindigkeit in Abhängigkeit von der Krümmung und von einer zulässigen Querbeschleunigung ermittelt wird.

Die vorliegend beschriebene Erfindung setzt die relevante Kurven-Geschwindigkeit an die relevante Position innerhalb der Kurve, wenn nötig auch gleich mehrere Geschwindigkeits-Limits. Somit können Geschwindigkeits-Regelsysteme genau und zuverlässig funktionieren.

In einer Ausführungsform wird die zulässige Querbeschleunigung in Abhängigkeit von der Krümmung vorgegeben, insbesondere als Kennlinie oder Look-up-Tabelle.

In einer Ausführungsform wird der identifizierte Kurvenabschnitt in mehrere aneinandergrenzende Kurvensektionen unterteilt, wobei Grenzen zwischen benachbarten Kurvensektionen durch die lokalen Krümmungsmaxima gebildet werden.

In einer Ausführungsform werden Abweichungen zwischen den zulässigen Kurvengeschwindigkeiten am Anfang und Ende einer jeweiligen Kurvensektion ermittelt, wobei dann, wenn die ermittelte Abweichung eine vorgegebene Geschwindigkeitsschwelle übersteigt, auf der jeweiligen Kurvensektion durch Interpolation, insbesondere linearer Interpolation, basierend auf den zulässigen Kurvengeschwindigkeiten am Anfang und Ende der jeweiligen Kurvensektion, mindestens eine weitere zulässige Kurvengeschwindigkeit ermittelt wird.

In einer Ausführungsform wird eine Anzahl der ermittelten weiteren zulässigen Kurvengeschwindigkeiten umso größer gewählt, je größer die ermittelte Abweichung zwischen den zulässigen Kurvengeschwindigkeiten am Anfang und Ende der jeweiligen Kurvensektion ist.

In einer Ausführungsform wird eine jeweilige Position zu der mindestens einen weiteren zulässigen Kurvengeschwindigkeit bestimmt, indem die zugehörige Krümmung bestimmt und eine exakte Position der zusätzlichen Geschwindigkeitsbegrenzung durch lineare Interpolation zwischen zwei Krümmungswerten ermittelt wird.

In einer Ausführungsform wird eine Kennlinie oder Look-up-Tabelle zur Ermittlung der zulässigen Querbeschleunigung in Abhängigkeit der Geschwindigkeit eingesetzt.

In einer Ausführungsform wird für die zusätzliche Geschwindigkeitsbegrenzung eine nachträgliche Untersuchung für deren Notwendigkeit auf Basis des Beschleunigungsvorgangs durchgeführt, wobei die zusätzliche Geschwindigkeitsbegrenzung entfällt, wenn die erforderliche Beschleunigung zum Erreichen der Geschwindigkeitsbegrenzung an einem Folge-Krümmungsmaximum ein vorgegebenes oder vorgebbares, einstellbares Beschleunigungs-Limit überschreitet.

Ausführungsbeispiele der Erfindung werden im Folgenden anhand von Zeichnungen näher erläutert.

Dabei zeigen:

Fig. 1     eine schematische Ansicht einer Kurve,

Fig. 2     eine schematische Ansicht der Kurve, die in Kurvensektionen eingeteilt ist,

Fig. 3     eine schematische Ansicht einer Kennlinie einer zulässigen Querbeschleunigung in Abhängigkeit von einer Kurvenkrümmung,

Fig. 4     eine schematische Ansicht einer Kurve, die in Kurvensektionen eingeteilt ist und

Fig. 5     eine schematische Ansicht einer Kennlinie einer zulässigen Querbeschleunigung in Abhängigkeit von einer Geschwindigkeit.

Einander entsprechende Teile sind in allen Figuren mit den gleichen Bezugszeichen versehen.

Die Erfindung betrifft ein Verfahren zur Begrenzung einer Fahrgeschwindigkeit eines Fahrzeugs beim Durchfahren einer Kurve K.

Erfindungsgemäß wird, insbesondere anhand einer digitalen Karte, ein Krümmungsverlauf eines dem Fahrzeug vorausliegenden Streckenabschnitts ermittelt. Durch Auswertung des Krümmungsverlaufs wird ein Streckenabschnitt, auf dem eine Krümmung $\kappa$, auch als Kurvenkrümmung x bezeichnet, größer als ein vorgegebener Krümmungsgrenzwert $\kappa_{lim}$ ist, als Kurvenabschnitt identifiziert. Unter Krümmung x wird hierbei der Betrag der Krümmung verstanden, d.h. ein eventuelles Vorzeichen, das die Richtung der Krümmung angibt, also angibt, ob es sich bei der Krümmung um eine Krümmung nach links oder rechts handelt, bleibt unberücksichtigt. Auf dem identifizierten Kurvenabschnitt werden lokale Krümmungsmaxima k2, k6, k8, k12 identifiziert. Für jedes lokale Maximum wird eine zulässige Kurvengeschwindigkeit $v$ in Abhängigkeit der Krümmung $\kappa$ und in Abhängigkeit von einer zulässigen Querbeschleunigung ermittelt. Das Fahrzeug wird derart gesteuert, dass die ermittelten zulässigen Kurvengeschwindigkeiten $v$ beim Durchfahren der Kurve K nicht überschritten werden.

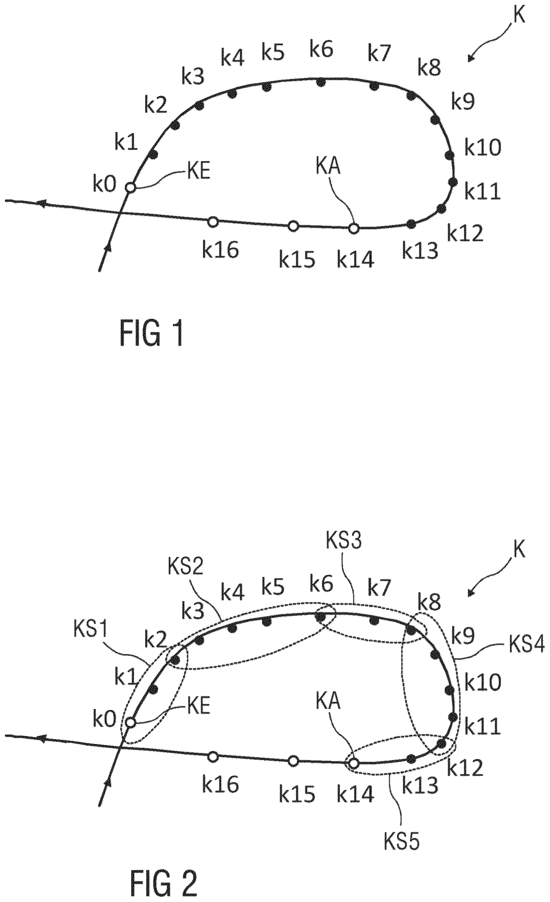

Figur 1 ist eine schematische Ansicht einer Kurve K.

Die Kurve K wird beispielsweise in Bereiche k1 bis k16 mit Kurveneingang KE und Kurvenausgang KA eingeteilt, die eine Krümmung $\kappa$ größer einem

Krümmungsschwellwert $\kappa_{lim}$ in eine Krümmungs-Richtung aufweisen. Dabei ist in Figur 1 der Kurveneingang KE der Bereich k0 vor einer Kurve K mit einer kleineren Krümmung $\kappa$ als der Krümmungsschwellwert $\kappa_{lim}$. Der Kurvenausgang KA ist in Figur 1 der Bereich k14 nach der Kurve K mit einer kleineren Krümmung $\kappa$ als der Krümmungsschwellwert $\kappa_{lim}$.

Figur 2 ist eine schematische Ansicht der Kurve K, die in Kurvensektionen KS1 bis KS5 eingeteilt ist.

Zwischen Kurveneingang KE und Kurvenausgang KA kann eine weitere Teilung der Kurve K in Kurven-Sektionen KS1 bis KS5 erfolgen, die jeweils einen Sektions-Beginn und ein Sektions-Ende aufweisen.

Eine Start-Sektion KS1 beginnt beim Kurveneingang KE, in Figur 2 der Bereich k0, und erstreckt sich bis zu einem folgenden Kurvenkrümmungsmaximum, in Figur 2 der Bereich k2. Eine End-Sektion KS5 endet beim Kurvenausgang, in Figur 2 der Bereich k14, und beginnt beim letzten Kurvenkrümmungsmaximum, in Figur 2 der Bereich k12.

Ein oder mehrere Mittel-Sektionen KS2 bis KS4 können zwischen der Start-Sektion KS1 und der End-Sektion KS5 liegen. Die Mittel-Sektionen KS2 bis KS4 beginnen jeweils bei einem Kurvenkrümmungsmaximum, in Figur 2 jeweils beim Bereich k2, k6 und k8, und erstrecken sich bis zu einem folgenden Kurvenkrümmungsmaximum, in Figur 2 die Bereiche k6, k8 und k12.

In anderen Ausführungsformen kann eine andere Anzahl von Kurvensektionen KS1 bis KSn vorgesehen sein.

Somit können mehrere Kurven-Sektionen KS1 bis KSn in derselben Richtung entstehen.

In einer Ausführungsform erhält der Kurveneingang KE keine Geschwindigkeitsbegrenzung $v_{zul}$.

Die erste Geschwindigkeitsbegrenzung innerhalb der ersten Kurven-Sektion KS1 (Bereiche k0 bis k2) kann an der Position des ersten Krümmungsmaximums (Bereich k2) oder an einer Position zusätzlicher Geschwindigkeitsbegrenzungen $v_{zul}$ liegen.

Innerhalb einer Kurven-Sektion KS1 bis KSn kann mindestens ein Krümmungsmaximum, jedoch können maximal zwei Krümmungsmaxima, enthalten sein.

An allen Krümmungsmaxima können die Geschwindigkeitsbegrenzungen $v_{zul}$ auf Basis des nachfolgenden Formelzusammenhangs ermittelt werden:

$$v_{zul}[km/h] = 3.6 \cdot \sqrt{a_{quer_{zul}}(\kappa) \cdot \frac{1}{\kappa}} \qquad (1)$$

Eine zulässige Querbeschleunigung $a_{quer_{zul}}(\kappa)$ kann als Kennlinie KL1 in Abhängigkeit von einer Kurvenkrümmung $\kappa$ zur Verfügung gestellt werden.

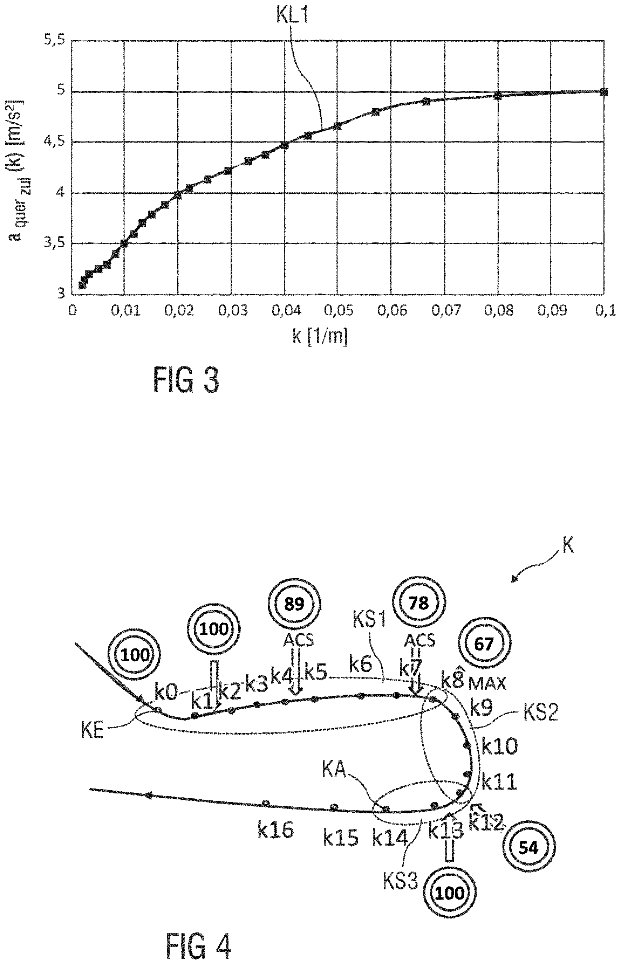

Figur 3 ist eine schematische Ansicht der Kennlinie KL1.

Innerhalb der Kennlinie KL1 ist zwischen deren Stützstellen linear zu interpolieren.

Beispielsweise kann die Kennlinie KL1 folgende Stützstellen aufweisen:

| $\kappa \left[\frac{1}{m}\right]$ | $a_{quer_{zul}}(\kappa) \left[\frac{m}{s^2}\right]$ |
|---|---|
| 1 | 5 |
| 0,1 | 5 |
| 0,06 | 4,9 |
| 0,05 | 4,6 |
| $0,0\overline{3}$ | 4,3 |
| 0,025 | 4,1 |
| 0,02 | 4 |
| $0,01\overline{3}$ | 3,7 |
| 0,01 | 3,5 |
| 0,006 | 3,3 |
| 0,005 | 3,25 |
| $0,00\overline{3}$ | 3,2 |
| 0,0025 | 3,2 |
| 0,002 | 3,2 |

Die Geschwindigkeitsbegrenzungen $v_{zul}$ an den Krümmungsmaxima können wie folgt bestimmt werden.

Falls die betrachtete Kurven-Sektion KS1 bis KSn mit einem Krümmungsmaximum beginnt, so soll ein eventuell folgendes Krümmungsmaximum entfallen, wenn die erforderliche Beschleunigung ein vorgegebenes oder vorgebbares, einstellbares Limit unterschreitet (d.h. die Geschwindigkeitsbegrenzung $v_{zul}$ des Folge-Maximums liegt betragsseitig nahe am Vorläufer-Maximum).

Die Geschwindigkeitsbegrenzung $v_{zul}$ des Folge-Maximums entfällt, wenn:

$$a_{längs} = \frac{v_i + v_{i+1}}{2} \cdot \frac{|v_{i+1} - v_i|}{\Delta s} \qquad (2)$$

$$a_{längs} < a_{Limit_1}$$

| | |
|---|---|
| $a_{längs}$ | Längsbeschleunigung |
| $a_{Limit1}$ | Limit der Beschleunigung |
| i | Index entsprechend dem Index des Bereichs k1 bis kn |
| s | Strecke |
| $v_i$ | Geschwindigkeit |

Die Geschwindigkeitsbegrenzungen $v_{zul}$ (Position der gesetzlichen Geschwindigkeitsbegrenzungen $v_{legal}$) am Kurvenausgang KA werden wie folgt bestimmt:
Falls die betrachtete Kurven-Sektion KS1 bis KSn mit dem Kurven-Ende KE endet (das heißt die Krümmung $\kappa$ unterschreitet ein vorgegebenes oder vorgebbares, einstellbares Krümmungslimit), so wird die Position vor dem Kurvenende KE ermittelt, an der die Krümmung $\kappa$ der aktuellen Geschwindigkeitsbegrenzung $v_{zul}$ entspricht. Diese Position ist das gewünschte Kurvenende KE. Die Position wird berechnet nach:

$$\Delta s \quad = f(\kappa) \; ; \tag{3}$$

$$\kappa = f(v_{legal}) \tag{4}$$

Der Zusammenhang zwischen der Kurvenkrümmung $\kappa$ und der gesetzlichen Geschwindigkeitsbegrenzung $v_{legal}$ kann in einer Kennlinie oder Look-up-Tabelle hinterlegt sein.

$$\kappa = \frac{a_{quer_{zul}}(v_{legal})}{\left(\frac{v_{legal}}{3.6}\right)^2} \tag{5}$$

Der Zusammenhang zwischen der zulässige Querbeschleunigung $a_{quer_{zul}}$ und der gesetzlichen Geschwindigkeitsbegrenzung $v_{legal}$ kann in einer Kennlinie oder Look-up-Tabelle hinterlegt sein.

$$\Delta s \quad = s_{i+1} - s_i \cdot \frac{\kappa - \kappa_i}{\kappa_{i+1} - \kappa_i} \tag{6}$$

$$s \quad = s_i + \Delta s \tag{7}$$

$v_{legal}$ gesetzliche Geschwindigkeitsbegrenzung
Beispielsweise gilt

$$\Delta s \quad = s_{14} - s_{13} \cdot \frac{\kappa - \kappa_{13}}{\kappa_{14} - \kappa_{13}} \tag{8}$$

Das Kurvenende KE wird in der Applikation beispielsweise mit dem höchsten Wert, beispielsweise 255, eines Zahlenbereichs einer bestimmten Bitbreite, beispielsweise 8 Bit, gekennzeichnet, was einen Zustand bezeichnen kann, in dem keine Daten zur Verfügung stehen. Am Kurvenende KE kann erstmalig wieder die gesetzliche Geschwindigkeitsbegrenzung $v_{legal}$ gefahren werden.

Die Berechnung zusätzlicher Geschwindigkeitsbegrenzungen innerhalb einzelner Kurven-Sektionen KS1 bis KSn kann wie folgt durchgeführt werden:
Es wird eine absolute Geschwindigkeitsdifferenz $\Delta v$ zwischen dem Beginn der Kurven-Sektion und dem Ende der Kurven-Sektion betrachtet und mit Geschwindigkeitsdifferenzparametern $v_{P1}$, $v_{P2}$ verglichen:
In einem Fall a) gilt $\Delta v < v_{P1}$, in diesem Fall wird keine zusätzliche Geschwindigkeitsbegrenzung gesetzt.

In einem Fall b) gilt $\Delta v > v_{P1}$, in diesem Fall wird eine zusätzliche Geschwindigkeitsbegrenzung an der Position gesetzt, die $\frac{\Delta v}{2}$ entspricht.

In einem Fall c) gilt $\Delta v > v_{P2}$, in diesem Fall werden zwei zusätzliche Geschwindigkeitsbegrenzungen an den Positionen, die $\frac{\Delta v}{3}$ und $\frac{2\Delta v}{3}$ entsprechen, gesetzt.

Figur 4 ist eine schematische Ansicht einer Kurve K, die in Kurvensektionen KS1 bis KS3 eingeteilt ist.

Eine Start-Sektion KS1 beginnt beim Kurveneingang KE, in Figur 4 der Bereich k0, und erstreckt sich bis zu einem folgenden Kurvenkrümmungsmaximum, in Figur 4 der Bereich k8. Eine End-Sektion KS3 endet beim Kurvenausgang KA, in Figur 4 der Bereich k14, und beginnt beim letzten Kurvenkrümmungsmaximum, in Figur 4 der Bereich k12.

Eine Mittel-Sektion KS2 liegt zwischen der Start-Sektion KS1 und der End-Sektion KS3. Die Mittelsektion KS2 beginnt bei einem Kurvenkrümmungsmaximum, in Figur 4 beim Bereich k8, und erstreckt sich bis zu einem folgenden Kurvenkrümmungsmaximum, in Figur 4 der Bereich k12. Am Beginn der Start-Sektion KS1 ist eine Geschwindigkeitsbegrenzung von 100 km/h gesetzt. Am Ende der Start-Sektion KS1 ist eine Geschwindigkeitsbegrenzung von 67 km/h gesetzt. Die absolute Geschwindigkeitsdifferenz $\Delta v$ zwischen dem Beginn der Start-Sektion KS1 und dem Ende der Start-Sektion KS1 ist 33 km/h. Im gezeigten Beispiel sind die Geschwindigkeitsdifferenzparameter $v_{P1}$, $v_{P2}$ wie folgt festgelegt:

$$v_{P2} = 30 \text{ km/h,}$$

$$v_{P1} = 20 \text{ km/h.}$$

Eine erste zusätzliche Geschwindigkeitsbegrenzung ist dann $v_{ACS1}$ = 100 - 33/3 = 89 km/h. Eine zweite zusätzliche Geschwindigkeitsbegrenzung ist $v_{ACS2}$ = 100 - 2*33/3 = 78 km/h.

Ferner können die zugehörigen Positionen zu den zusätzlichen Geschwindigkeitsbegrenzungen bestimmt werden. Hierfür können zu den zusätzlichen Geschwindigkeitsbegrenzungen die zugehörigen Kurvenkrümmungen bestimmt werden.

Die exakte Position der zusätzlichen Geschwindigkeitsbegrenzung wird beispielsweise durch lineare Interpolation zwischen zwei Krümmungswerten ermittelt. Es kann eine Kennlinie zur Ermittlung der zulässigen Querbeschleunigung $a_{quer_{zul}}$ in Abhängigkeit der Geschwindigkeit $v$ eingesetzt werden.

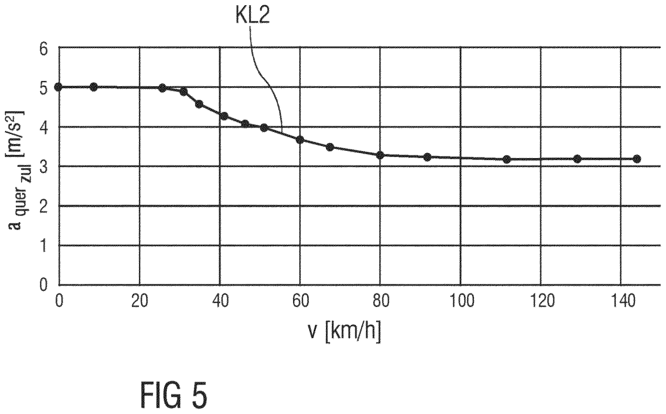

Figur 5 ist eine schematische Ansicht der Kennlinie KL2.

Beispielsweise kann die Kennlinie KL2 folgende Stützstellen aufweisen:

| $v\left[\dfrac{km}{h}\right]$ | $a_{quer_{zul}}\left[\dfrac{m}{s^2}\right]$ |
|---|---|
| 8 | 5 |
| 25 | 5 |
| 30,9 | 4,9 |
| 34,5 | 4,6 |
| 40,9 | 4,3 |
| 46,1 | 4,1 |
| 50,9 | 4 |
| 60 | 3,7 |
| 67,3 | 3,5 |
| 80 | 3,3 |
| 91,8 | 3,25 |
| 111,5 | 3,2 |
| 128,8 | 3,2 |
| 144 | 3,2 |

$$\kappa = \frac{a_{quer_{zul}}(\overline{v})}{\left(\frac{\overline{v}}{3.6}\right)^2} \quad \text{mit} \quad \overline{v} = (v_{i+1} + v_i)\,/\,2 \qquad\qquad (9)$$

$$\Delta s = f(\kappa) \; ; \; \kappa = Kennlinie\left(\frac{\Delta v}{3} \text{ bzw. } \frac{2\Delta v}{3}\right) \qquad\qquad (10)$$

$$\Delta s = s_{i+1} - s_i \cdot \frac{\kappa - \kappa_i}{\kappa_{i+1} - \kappa_i} \qquad\qquad (11)$$

$$s = s_i + \Delta s \qquad (12)$$

$\bar{v}$  mittlere Geschwindigkeit

Für die zusätzliche Geschwindigkeitsbegrenzung kann eine nachträgliche Untersuchung für deren Notwendigkeit auf Basis des Beschleunigungsvorgangs stattfinden. Die zusätzliche Geschwindigkeitsbegrenzung entfällt beispielsweise, wenn die erforderliche Beschleunigung zum Erreichen der Geschwindigkeitsbegrenzung $v_{zul}$ am Folge-Krümmungsmaximum ein vorgegebenes oder vorgebbares, einstellbares Beschleunigungs-Limit überschreitet (das heißt die zusätzliche Geschwindigkeitsbegrenzung unterscheidet sich zu stark vom folgenden Maximum und ist deshalb obsolet).

Die zusätzliche Geschwindigkeitsbegrenzung entfällt beispielsweise, wenn gilt:

$$a_{längs} = \frac{v_i + v_{i+1}}{2} \cdot \frac{|v_{i+1} - v_i|}{\Delta s} \qquad (13)$$

$$a_{längs} > a_{Limit_2} \qquad (14)$$

$a_{Limit1}$  Limit der Beschleunigung

Die Limits der Beschleunigung $a_{Limit1}$ und $a_{Limit1}$ können unterschiedlich oder gleich vorgegeben sein.

## Patentansprüche

1. Verfahren zur Begrenzung einer Fahrgeschwindigkeit (v) eines Fahrzeugs beim Durchfahren einer Kurve (K), wobei ein Verlauf einer Krümmung (x) eines dem Fahrzeug vorausliegenden Streckenabschnitts ermittelt wird, wobei abhängig vom Verlauf der Krümmung ($\kappa$) und von physikalischen Belastungsgrenzen des Fahrzeugs ein Verlauf einer zulässigen Kurvengeschwindigkeit (v) ermittelt und das Fahrzeug so gesteuert wird, dass die ermittelten zulässigen Kurvengeschwindigkeiten (v) beim Durchfahren der Kurve (K) nicht überschritten werden, wobei

   - durch Auswertung des Verlaufs der Krümmung ($\kappa$) ein Streckenabschnitt, auf dem die Krümmung (x) größer als ein vorgegebener Krümmungsgrenzwert ($\kappa_{lim}$) ist, als Kurvenabschnitt identifiziert wird, **dadurch gekennzeichnet, dass**
   - auf dem identifizierten Kurvenabschnitt lokale Krümmungsmaxima identifiziert werden, und wobei
   - bei Identifikation von mehreren lokalen Krümmungsmaxima auf dem Kurvenabschnitt für jedes lokale Krümmungsmaximum eine zulässige Kurvengeschwindigkeit (v) in Abhängigkeit von der Krümmung ($\kappa$) und von einer zulässigen Querbeschleunigung $(a_{quer_{zul}})$ ermittelt wird.

2. Verfahren nach Anspruch 1,
   **dadurch gekennzeichnet, dass** die zulässige Querbeschleunigung $(a_{quer_{zul}})$ in Abhängigkeit von der Krümmung ($\kappa$) vorgegeben wird.

3. Verfahren nach Anspruch 2,
   **dadurch gekennzeichnet, dass** die zulässige Querbeschleunigung $(a_{quer_{zul}})$ in Abhängigkeit von der Krümmung ($\kappa$) als Kennlinie (KL1) oder Look-up-Tabelle vorgegeben wird.

4. Verfahren nach einem der vorhergehenden Ansprüche,
   **dadurch gekennzeichnet, dass** der identifizierte Kurvenabschnitt in mehrere aneinandergrenzende Kurvensektionen (KS1 bis KSn) unterteilt wird, wobei Grenzen zwischen benachbarten Kurvensektionen (KS1 bis KSn) durch die lokalen Krümmungsmaxima gebildet werden.

5. Verfahren nach einem der vorhergehenden Ansprüche,
   **dadurch gekennzeichnet, dass** Abweichungen zwischen den zulässigen Kurvengeschwindigkeiten (v) am Anfang und Ende einer jeweiligen Kurvensektion (KS1 bis KSn) ermittelt werden, wobei dann, wenn die ermittelte Abweichung eine vorgegebene Geschwindigkeitsschwelle übersteigt, auf der jeweiligen Kurvensektion (KS1 bis KSn) durch Interpolation, basierend auf den zulässigen Kurvengeschwindigkeiten (v) am Anfang und Ende der jeweiligen Kurvensektion (KS1 bis KSn), mindestens eine weitere zulässige Kurvengeschwindigkeit (v) ermittelt wird.

**6.** Verfahren nach Anspruch 5,
**dadurch gekennzeichnet, dass** die Interpolation als lineare Interpolation durchgeführt wird.

**7.** Verfahren nach Anspruch 5 oder 6,
**dadurch gekennzeichnet, dass** eine Anzahl der ermittelten weiteren zulässigen Kurvengeschwindigkeiten ($v$) umso größer gewählt wird, je größer die ermittelte Abweichung zwischen den zulässigen Kurvengeschwindigkeiten ($v$) am Anfang und Ende der jeweiligen Kurvensektion (KS1 bis KSn) ist.

**8.** Verfahren nach einem der Ansprüche 5 bis 7,
**dadurch gekennzeichnet, dass** eine jeweilige Position zu der mindestens einen weiteren zulässigen Kurvengeschwindigkeit ($v$) bestimmt wird, indem die zugehörige Krümmung ($\kappa$) bestimmt und eine exakte Position der zusätzlichen Geschwindigkeitsbegrenzung durch lineare Interpolation zwischen zwei Krümmungswerten ermittelt wird.

**9.** Verfahren nach Anspruch 8,
**dadurch gekennzeichnet, dass** eine Kennlinie (KL2) oder Look-up-Tabelle zur Ermittlung der zulässigen Querbeschleunigung ($a_{quer_{zul}}$) in Abhängigkeit der Geschwindigkeit ($v$) eingesetzt wird.

**10.** Verfahren nach einem der Ansprüche 5 bis 9,
**dadurch gekennzeichnet, dass** für die zusätzliche Geschwindigkeitsbegrenzung eine nachträgliche Untersuchung für deren Notwendigkeit auf Basis des Beschleunigungsvorgangs durchgeführt wird, wobei die zusätzliche Geschwindigkeitsbegrenzung entfällt, wenn die erforderliche Beschleunigung zum Erreichen der Geschwindigkeitsbegrenzung an einem Folge-Krümmungsmaximum ein vorgegebenes oder vorgebbares, einstellbares Beschleunigungs-Limit überschreitet.

**Claims**

**1.** Method for limiting a driving speed ($v$) of a vehicle when driving around a corner (K), wherein a course of a curvature ($\kappa$) in a road portion ahead of the vehicle is determined, wherein, on the basis of the course of the curvature ($\kappa$) and physical load limits of the vehicle, a course of a permissible cornering speed ($v$) is determined, and the vehicle is controlled in such a way that the determined permissible cornering speeds ($v$) are not exceeded when driving around the corner (K), wherein

- by evaluating the course of the curvature ($\kappa$), a road portion on which the curvature ($\kappa$) is greater than a predetermined curvature limit value ($\kappa_{lim}$) is identified as a corner portion, **characterized in that**
- local curvature maxima are identified on the identified corner portion, and wherein
- if a plurality of local curvature maxima are identified on the corner portion, a permissible cornering speed ($v$) is determined for each local curvature maximum on the basis of the curvature ($\kappa$) and a permissible lateral acceleration ($\alpha_{quer_{zul}}$).

**2.** Method according to claim 1,
**characterized in that** the permissible lateral acceleration ($\alpha_{quer_{zul}}$) is predetermined on the basis of the curvature ($\kappa$).

**3.** Method according to claim 2,
**characterized in that** the permissible lateral acceleration ($\alpha_{quer_{zul}}$) is predetermined as a characteristic curve (KL1) or look-up table on the basis of the curvature ($\kappa$).

**4.** Method according to any of the preceding claims,
**characterized in that** the identified corner portion is divided into a plurality of adjacent corner sections (KS1 to KSn), wherein boundaries between adjacent corner sections (KS1 to KSn) are formed by the local curvature maxima.

**5.** Method according to any of the preceding claims,
**characterized in that** deviations between the permissible cornering speeds ($v$) at the beginning and end of a particular corner section (KS1 to KSn) are determined, wherein, if the determined deviation exceeds a predetermined speed threshold, at least one further permissible cornering speed ($v$) is determined on the particular corner section (KS1 to KSn) by interpolation based on the permissible cornering speeds ($v$) at the beginning and end of the particular corner section (KS1 to KSn).

**6.** Method according to claim 5,
**characterized in that** the interpolation is carried out as linear interpolation.

**7.** Method according to either claim 5 or claim 6,
**characterized in that** a number of the determined further permissible cornering speeds (v) is selected such that the greater the number, the greater the determined deviation between the permissible cornering speeds (v) at the beginning and end of the particular corner section (KS1 to KSn).

**8.** Method according to any of claims 5 to 7,
**characterized in that** a particular position for the at least one further permissible cornering speed (v) is ascertained by ascertaining the associated curvature ($\kappa$) and determining an exact position of the additional speed limit by linear interpolation between two curvature values.

**9.** Method according to claim 8,
**characterized in that** a characteristic curve (KL2) or look-up table is used to determine the permissible lateral acceleration ($\alpha_{quer_{zul}}$) on the basis of the speed (v).

**10.** Method according to any of claims 5 to 9,
**characterized in that,** for the additional speed limit, a subsequent investigation is carried out to determine whether the additional speed limit is required on the basis of the acceleration process, wherein the additional speed limit is not required if the acceleration required to reach the speed limit at a subsequent curvature maximum exceeds a predetermined or predeterminable adjustable acceleration limit.

**Revendications**

**1.** Procédé pour la limitation d'une vitesse de déplacement (v) d'un véhicule lors du passage d'un virage (K), dans lequel un tracé d'une courbure ($\kappa$) d'un tronçon de route précédant le véhicule est déterminé et, en fonction du tracé de la courbure ($\kappa$) et de limites de charge physiques du véhicule, un tracé d'une vitesse de virage admissible (v) est déterminé et le véhicule est commandé de telle sorte que les vitesses de virage admissibles (v) déterminées ne sont pas dépassées lors du passage du virage (K), dans lequel

- en évaluant le tracé de la courbure ($\kappa$), un tronçon de route sur lequel la courbure ($\kappa$) est supérieure à une valeur limite de courbure ($\kappa_{lim}$) prédéfinie est identifié comme tronçon de virage, **caractérisé en ce que**
- sur le tronçon de virage identifié, des maxima locaux de courbure sont identifiés, et dans lequel
- en cas d'identification de plusieurs maxima locaux de courbure sur le tronçon de virage, une vitesse de virage admissible (v) est déterminée pour chaque maximum local de courbure en fonction de la courbure ($\kappa$) et d'une accélération transversale admissible ($a_{quer_{zul}}$).

**2.** Procédé selon la revendication 1,
**caractérisé en ce que** l'accélération transversale admissible ($a_{quer_{zul}}$) est prédéfinie en fonction de la courbure ($\kappa$).

**3.** Procédé selon la revendication 2,
**caractérisé en ce que** l'accélération transversale admissible ($a_{quer_{zul}}$) est prédéfinie en fonction de la courbure ($\kappa$) sous la forme d'une courbe caractéristique (KL1) ou d'une table de consultation.

**4.** Procédé selon l'une des revendications précédentes,
**caractérisé en ce que** le tronçon de virage identifié est divisé en plusieurs sections de virage adjacentes (KS1 à KSn), dans lequel des limites entre des sections de courbe adjacentes (KS1 à KSn) sont formées par les maxima locaux de courbure.

**5.** Procédé selon l'une des revendications précédentes,
**caractérisé en ce que** des écarts entre les vitesses de virage admissibles (v) sont déterminés au début et à la fin d'une section de virage (KS1 à KSn) respective, dans lequel au moins une autre vitesse de virage admissible (v) est déterminée sur la section de virage (KS1 à KSn) respective par interpolation, sur la base des vitesses de virage admissibles (v) au début et à la fin de la section de courbe (KS1 à KSn) respective, lorsque l'écart déterminé dépasse un seuil de vitesse prédéfini.

**6.** Procédé selon la revendication 5,
**caractérisé en ce que** l'interpolation est réalisée sous la forme d'une interpolation linéaire.

**7.** Procédé selon la revendication 5 ou 6,
**caractérisé en ce qu'**un nombre des autres vitesses de virage admissibles (v) déterminées est choisi d'autant plus grand que l'écart déterminé entre les vitesses de virage admissibles (v) au début et à la fin de la section de virage (KS1 à KSn) respective est grand.

**8.** Procédé selon l'une des revendications 5 à 7,
**caractérisé en ce qu'**une position respective par rapport à l'au moins une autre vitesse de virage admissible (v) est déterminée en établissant la courbure ($\kappa$) associée et en déterminant une position exacte de la limitation de vitesse supplémentaire par interpolation linéaire entre deux valeurs de courbure.

**9.** Procédé selon la revendication 8,
**caractérisé en ce qu'**une courbe caractéristique (KL2) ou une table de consultation est utilisée pour la détermination de l'accélération transversale admissible ($a_{quer_{zul}}$) en fonction de la vitesse (v).

**10.** Procédé selon l'une des revendications 5 à 9,
**caractérisé en ce que,** pour la limitation de vitesse supplémentaire, un examen ultérieur de sa nécessité est réalisé sur la base du processus d'accélération, dans lequel la limitation de vitesse supplémentaire est supprimée lorsque l'accélération nécessaire pour atteindre la limitation de vitesse à un maximum de courbure consécutif dépasse une limite d'accélération réglable prédéfinie ou pouvant être prédéfinie.

FIG 1

FIG 2

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006365 A1
- DE 102009023489 A1
- US 20050240334 A1
- DE 102009000397 A1